# EUROPEAN PATENT SPECIFICATION

(11) **EP 3 795 385 B1**
(45) Date of publication and mention of the grant of the patent: **13.03.2024**
(21) Application number: 19825493.0
(22) Date of filing: 17.06.2019
(51) Int. Cl.: B60C 11/03

(54) **PNEUMATIC TIRE FOR AGRICULTURAL VEHICLES**
LUFTREIFEN FÜR LANDWIRTSCHAFTLICHE FAHRZEUGE
PNEU POUR VÉHICULES AGRICOLES

(30) Priority: 25.06.2018 JP 2018120303
(43) Date of publication of application: 24.03.2021
(73) Proprietor: Bridgestone Corporation, Chuo-Ku Tokyo 104-8340 (JP)
(72) Inventor: KODAMA, Takashi, Tokyo 104-8340 (JP)
(74) Representative: Marks & Clerk LLP
(86) International application number: PCT/JP2019/023953
(87) International publication number: WO 2020/004113

(56) References cited:
- EP-A1- 2 752 311
- WO-A1-2013/031706
- JP-A- H1 081 112
- JP-A- S58 152 608
- JP-A- 2005 186 703
- JP-Y1- S3 517 201
- US-A- 4 574 857

## Description

### Technical Field

The present invention relates to a pneumatic tire for an agricultural vehicle.

### Background Art

In recent years, because of the situation regarding housing and land development, there has been a marked rise in residential areas being located adjacent to agricultural land and the like. When trucks that have finished working in wet fields, on soft ground, or on muddy ground, or agricultural vehicles such as rice transplanters, or civil engineering vehicles and the like are traveling on a normal sealed road, in some cases mud that is adhered to a lug-equipped running body such as a tire or a continuous track is left on the road surface. Moreover, in cases in which a vehicle performing agricultural work in one field moves to another field and continues to perform agricultural work, the problem arises that mud from the one field becomes mixed with mud from the other field.

In order to inhibit harmful effects such as these, there is a strong demand for the establishment of technology to prevent mud from becoming adhered to lug-equipped running bodies such as agricultural vehicles or civil engineering vehicles or the like that are fitted with tires or continuous tracks or the like.

In Japanese Unexamined Patent Application Laid-Open (JP-A) No. H10-119516 there is disclosed a lug-equipped running body that is provided with a plurality of lugs that are disposed on a tread at intervals in a circumferential direction, and in which at least a surface of lug bottom portions is covered by a mud adhesion prevention layer that is formed by a low-hardness elastic body layer, and in which a plurality of grooves are provided in a surface of the mud adhesion prevention layer of the lug bottom portions.

In Japanese Unexamined Patent Application Laid-Open (JP-A) No. H10-230708 there is disclosed a lug-equipped running body that is provided with a plurality of lugs that are disposed at intervals in a circumferential direction on a tread, and in which at least a surface of lug bottom portions is covered by a mud adhesion prevention layer that is formed by a low-hardness elastic body layer, and in which a plurality of substantially rectilinear grooves having a predetermined length are provided at predetermined intervals in a longitudinal direction of these grooves in a surface of the mud adhesion prevention layer of the lug bottom portions, and in which the plurality of substantially rectilinear grooves having a predetermined length are provided in a plurality of rows. Reference is also made to EP 2752311 A1, which discloses a tire for an agricultural machine.

### SUMMARY OF THE INVENTION

### Technical Problem

In a pneumatic tire for an agricultural vehicle, an angle of inclination of the lugs is small relative to the tire width direction so that, while traveling, traction is generated by the lugs digging into the soil. However, if the placement pitch of the lugs in the tire circumferential direction is too small, then it is difficult to inhibit mud from adhering to the tread portion.

As a measure to prevent this, technology has been proposed in which the surface of each lug bottom portion is covered by a mud adhesion prevention layer that is formed by a low-hardness elastic body layer, and by providing a plurality of grooves in the surface of the mud adhesion prevention layer, the adhesion of mud to the lug-equipped running body is inhibited.

The lug-equipped running body having the above-described structure exhibits a pronounced effect towards inhibiting the adhesion of mud compared to a lug-equipped running body that does not have the mud adhesion prevention layer and the plurality of grooves, however, further improvement is still desired.

It is an object of the present invention to enable the amount of mud adhering to a tread portion to be inhibited in a pneumatic tire for an agricultural vehicle.

### Solution to the Problem

The present invention of a pneumatic tire for an agricultural vehicle is set out in the appended set of claims.

### Advantageous Effects of the Invention

According to the pneumatic tire for an agricultural vehicle according to the present invention, it is possible to more effectively inhibit mud from adhering to a tread portion compared to a structure in which the lugs are formed extending to the vicinity of the equator of the tread portion.

### BRIEF DESCRIPTION OF THE DRAWINGS

FIG. 1 is a cross-sectional view showing an overall structure of a tire according to a first exemplary embodiment of the present invention.
FIG. 2 is a schematic view showing a case in which a tread portion of the tire according to the first exemplary embodiment of the present invention is in contact with the ground.
FIG. 3 is a schematic view showing another example of a case in which the tread portion of the tire according to the first exemplary embodiment of the present invention is in contact with the ground.
FIG. 4 is a cross-sectional view taken across a line 4-4 of the tire shown in FIG. 2, showing an example not forming part of the present invention.
FIG. 5 is a cross-sectional view taken across the line 4-4 of the tire shown in FIG. 2.
FIG. 6 is a is a cross-sectional view taken across a line 6-6 of the tire shown in FIG. 2.
FIG. 7 is a table showing results obtained from a mud adhesion amount test performed on the tire according to the first exemplary embodiment of the present invention.
FIG. 8 is a schematic view showing a case in which a tread portion of a tire according to a second exemplary embodiment of the present invention is in contact with the ground.
FIG. 9 is a schematic view showing a case in which a tread portion of a tire of a comparative example is in contact with the ground.
FIG. 10 is a cross-sectional view taken across a line 10-10 of the tire shown in FIG. 9.

### DESCRIPTION OF THE EMBODIMENTS

### [First Exemplary Embodiment]

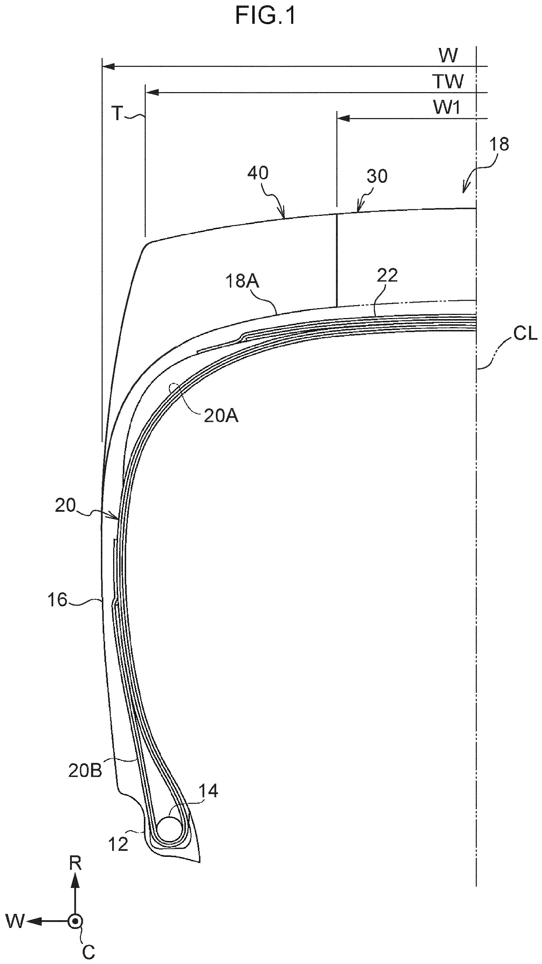

An example of a tire according to a first exemplary embodiment of the present invention will now be described in accordance with FIG. 1 through FIG. 7.

Note that an arrow C, an arrow R, and an arrow W that are each shown in the drawings respectively indicate a tire circumferential direction or tire rotation direction, a tire radial direction, and a tire width direction or tire rotation axis direction.

Firstly, a simple description will be given of an example of an overall structure of a tire 10 of the present exemplary embodiment.

As is shown in FIG. 1, the tire 10 includes a pair of bead portions 12, sidewall portions 16 that are connected respectively to the corresponding bead portion 12, and a tread portion 18 that is connected on both sides thereof to the sidewall portions 16.

Note that a case is assumed in which the tire 10 is symmetrical in the tire width direction W relative to a tire equator CL, and only half of the tire 10 in the tire width direction W is shown in FIG. 1. In addition, in order to enable the overall tire structure to be more easily understood, tire hatching has been omitted from the drawings.

The tire 10 additionally includes, for example, two or more layers of carcass 20 that are provided so as to span the distance between the pair of bead portions 12 in a toroidal configuration, and, for example, two or more belt layers 22 that are provided on an outer circumference of a crown portion of the carcass 20.

The carcass 20 includes, for example, a carcass main body portion 20Athat is disposed so as to span the distance between a pair of bead cores 14, and folded portions 20B that are wrapped around the corresponding bead core 14.

Here, the tire 10 is an example of a pneumatic tire for an agricultural vehicle.

In the tread portion 18, there is provided a center rib 30 that is positioned on an outer circumferential side of the belt layers 22, and protrudes towards an outer side in the tire radial direction R from an outer circumferential surface 18A of the tread portion 18, and has a width W1 on both sides sandwiching the tire equator CL, and extends in the tire circumferential direction C.

In addition, on both sides in the tire width direction W of the center rib 30, there are provided lugs 40 that protrude towards the outer side in the tire radial direction R from the outer circumferential surface 18A of the tread portion 18, and are joined integrally with end surfaces 34 (hereinafter, these may be referred to collectively as 'two end surfaces 34') on both sides of the center rib 30, and that are disposed respectively on one side and on another side of the center rib 30 in the width direction thereof so as to be at intervals from each other in the tire circumferential direction C on both the one side and the other side.

Here, the outer circumferential surface 18A is an example of an outer circumference, and the end surfaces 34 on both sides are examples of the two end surfaces.

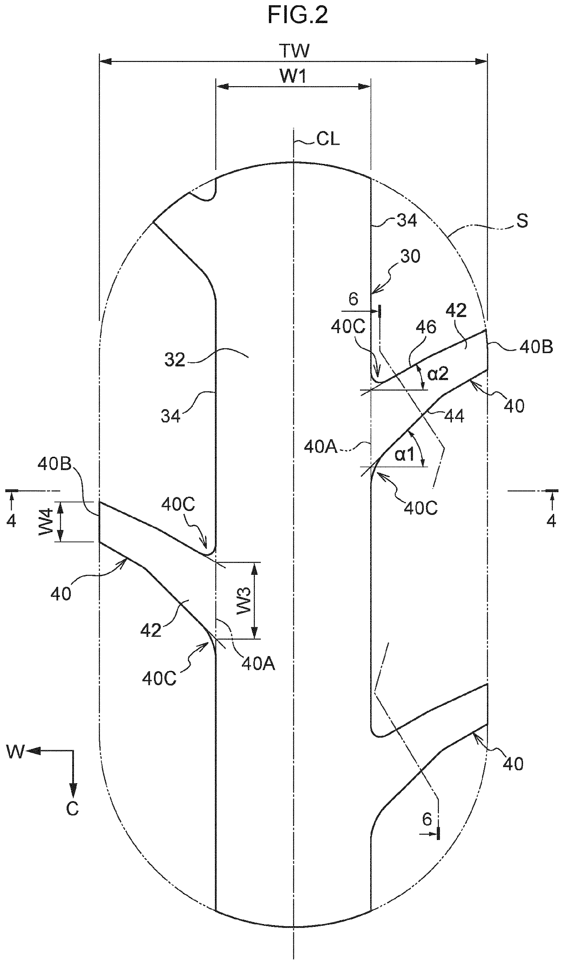

In the present exemplary embodiment, as is shown in FIG. 2, for example, the lugs 40 are disposed along the tire circumferential direction C on one side and then on the other side in the width direction of the center rib 30, in other words, are disposed alternatingly on both sides of the center rib 30 in the tire width direction W. Each lug 40 is inclined relative to the tire width direction W.

Moreover, as is shown in FIG. 1, an outer end portion 40B on the outer side in the tire width direction W of each lug 40 is positioned further to the outer side in the tire width direction W than tread ends T, and is formed so as to be continuous with the corresponding side wall portion 16.

Note that the tread ends T refers to the ground-contacting portions on the outermost side in the tire width direction when the tire 10 is fitted onto a standard rim as stipulated in the JATMA (Japan Automobile Tyre Manufacturers Association, Inc.) YEAR BOOK, 2018 edition, and is filled to an internal pressure of 100% of the air pressure (i.e., the maximum air pressure) that corresponds to the maximum load capability at the applicable size/ply rating as per this JATMA YEAR BOOK, and when a load that corresponds to this maximum load capability is applied thereto. Note that, at the place of use or at the place of manufacture, if TRA Standards or ETRTO Standards are being applied, then the tire 10 conforms to the relevant Standards.

Here, the present exemplary embodiment will be described with reference to FIG. 2 through FIG. 6.

As is shown in FIG. 2 through FIG. 5, in the tire 10 according to the present exemplary embodiment, a center rib 30 is provided that protrudes towards an outer side in the tire radial direction R from the outer circumferential surface 18A of the tread portion 18, and has a width W1 on both sides sandwiching the tire equator CL, and extends in a tire circumferential direction C.

In addition, lugs 40 are provided that protrude towards the outer side in the tire radial direction R from the outer circumferential surface 18A of the tread portion 18 on both sides in the width direction of the center rib 30, and are joined integrally to the two end surfaces 34 of the center rib 30. These lugs are disposed on one side and on another side in the width direction of the center rib 30, and are disposed respectively on this one side and on the other side at intervals from each other in the tire circumferential direction C.

In the present exemplary embodiment, for example, along the tire circumferential direction C, the lugs 40 are disposed on one side and then on the other side in the width direction of the center rib 30, in other words, are disposed alternatingly on both sides of the center rib 30 in the tire width direction W.

Each lug 40 is inclined so as to slope towards an opposite side from the tire rotation direction C side relative to a tire rotation axis direction (not shown in the drawings) as it approaches the outer side in the tire width direction W.

### [Center Rib]

The center rib 30 has a width W1 of not less than 30% and not more than 50% of the tread width TW of the tread portion 18. In addition, the two end surfaces 34 of the center rib 30 are formed so as to be parallel with the tire equator CL.

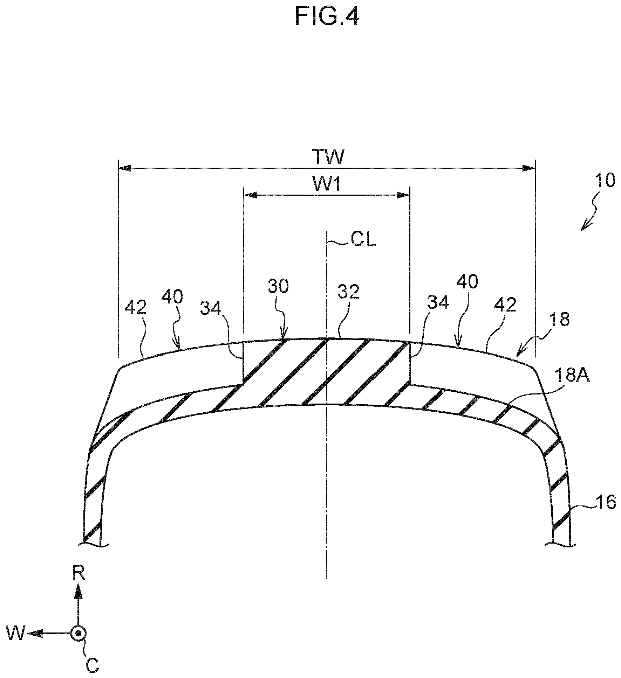

Moreover, as is shown in FIG. 4, which relates to an example not forming part of the present invention, the two end surfaces 34 of the center rib 30 are formed as perpendicular surfaces relative to the tire radial direction R.

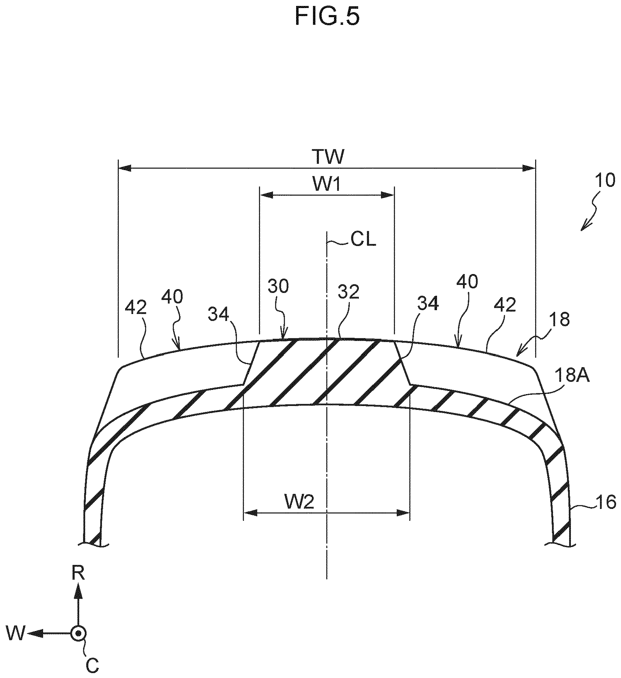

As is shown in FIG. 5, according to the present invention, it is foreseen for the two end surfaces 34 of the center rib 30 to each be inclined so as to slope respectively towards the equator CL as they approach the outer side in the tire radial direction R.

The purpose of this is to inhibit mud 50 from becoming adhered to the two end surfaces 34. Namely, the width W1 of the ground-contacting surface 32 of the center rib 30 is made smaller than a width W2 of a side thereof (hereinafter, this may be referred to as a `bottom portion') which is the inner side in the tire radial direction R of the center rib 30, and which is continuous with the outer circumferential surface 18A of the tread portion 18.

In the present exemplary embodiment, as an example, the size of the tire 10 that is used is between 9.5 and 24.

If the width W1 of the center rib 30 is less than 30% of the tread width TW, then the dimension in the tire width direction of the lugs 40 relative to the tread width TW increases. As a result of this, the amount of mud 50 adhering to the tread portion 18 increases compared to a case in which the width W1 of the center rib 30 is not less than 30% and not more than 50% of the tread width TW, so that a width W1 of the center rib 30 of less than 30% is not preferable.

Moreover, if the width W1 of the center rib 30 is more than 50% of the tread width TW, then the dimension in the tire width direction of the lugs 40 relative to the tread width TW decreases. As a result of this, although this tends to cause a decrease in the amount of mud 50 adhering to the tread portion 18 compared to a case in which the width W1 of the center rib 30 is not less than 30% and not more than 50% of the tread width TW, there is a reduction in the tractive force provided by the lugs 40 so that a width W1 of the center rib 30 of more than 50% is not preferable.

Because these comparisons have a relationship to the number of lugs 40 in a tire ground-contact area S (described below), detailed comparison results will be described more fully below in conjunction with the number of lugs 40.

### [Lugs]

As is shown in FIG. 2 through FIG. 6, the lugs 40 are provided on the outer circumferential surface 18A of the tread portion 18, and protrude towards the outer side in the tire radial direction on both sides of the center rib 30 in the width direction thereof.

In addition, the lugs 40 are joined integrally to the two end surfaces 34 of the center rib 30, and are disposed respectively on the one side and on the other side of the center rib 30 in the width direction thereof so as to be at intervals from each other in the tire circumferential direction on both the one side and the other side.

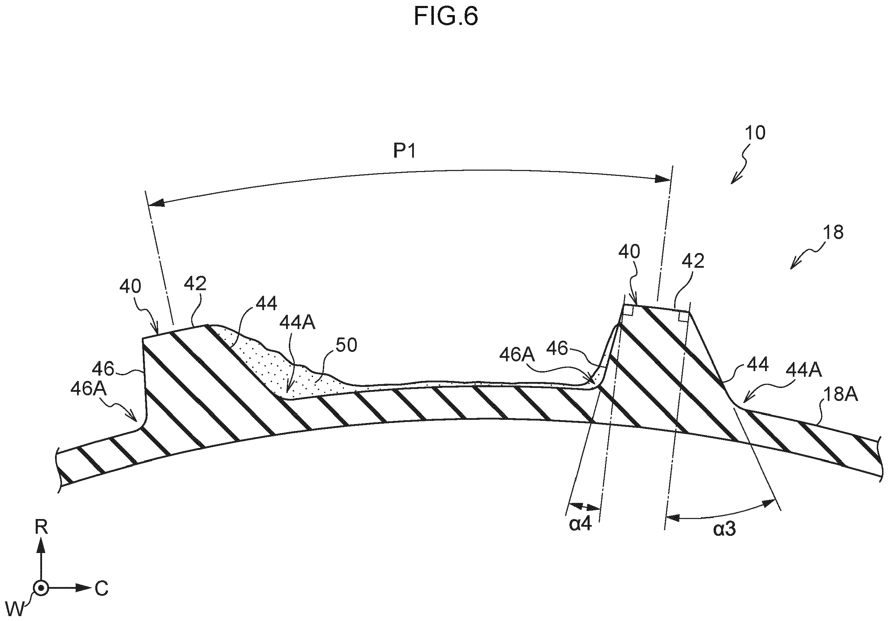

Moreover, as is shown in FIG. 2 and FIG. 6, each lug 40 is formed so as to include a ground-contacting surface 42, a front surface 44, a rear surface 46, an inner end portion 40A, and an outer end portion 40B.

The ground-contacting surface 42 has a predetermined height from the outer circumferential surface 18A of the tread portion 18.

The front surface 44 is an inclined surface that slopes on the tire rotation direction C side from an end portion in the tire rotation direction C of the ground-contacting surface 42 towards the outer circumferential surface 18A. The outer circumferential surface 18A side of the front surface 44 is integrally connected to the outer circumferential surface 18A via a front-surface continuous portion 44Athat is formed by a curved surface.

The rear surface 46 is an inclined surface that slopes on the opposite side from the tire rotation direction C from an end portion on the opposite side from the tire rotation direction C of the ground-contacting surface 42 towards the outer circumferential surface 18A. The outer circumferential surface 18A side of the rear surface 46 is integrally connected to the outer circumferential surface 18A via a rear-surface continuous portion 46A that is formed by a curved surface.

The inner end portion 40A is the equator CL side of the lug 40, and is connected to the center rib 30 so as to have the same height as the center rib 30. In addition, the inner end portion 40A has a dimension W3 in a direction extending in the tire rotation direction C, and connecting portions of the inner end portion 40A that connect to the center rib 30 on the tire rotation direction C side and on the opposite side in the tire rotation direction have a continuous portion 46C that is formed by a curved surface.

The outer end portion 40B is located on the tread end T (see FIG. 1) of the lug 40 in a direction away from the equator CL, and extends from the ground-contacting surface 42 towards the sidewall portion 16, and is connected to the sidewall portion. The outer end portion 40B has a dimension W4 in a direction extending in the tire rotation direction C.

More specifically, a sum total of a surface area of the ground-contacting surfaces 42 of all of the lugs 40 is not less than 4.5% and not more than 15% of a surface area of the tread portion 18 when the tread portion 18 is unrolled as a flat surface and looked at in plan view.

In the present exemplary embodiment, as an example, the dimension W3 of the inner end portion 40A is not less than 20 mm and not more than 50 mm, and the dimension W4 of the outer end portion 40B is not less than 15 mm and not more than 30 mm.

As an example, in the present exemplary embodiment, as is shown in FIG. 2, the dimension W3 of the inner end portion 40A is larger than the dimension of the outer end portion 40B. In other words, the lugs 40 are thickest on the center rib 30 side, and become progressively narrower as they approach the tread end T side from the center rib 30.

Compared with a tire 10 in which the tread portion 18 is formed solely by the lugs 40, the dimensions W3 and W4 increase the dimensions of each lug 40 in a direction extending in the tire rotation direction C.

Compared with a tire 10 that is formed solely by lugs 40, because the number of lugs 40 in the tire ground-contact area S (described below) is able to be reduced, this dimension enables the surface pressure of the ground-contacting surface 42 to be kept at an appropriate level in consideration of an axle weight of the tire.

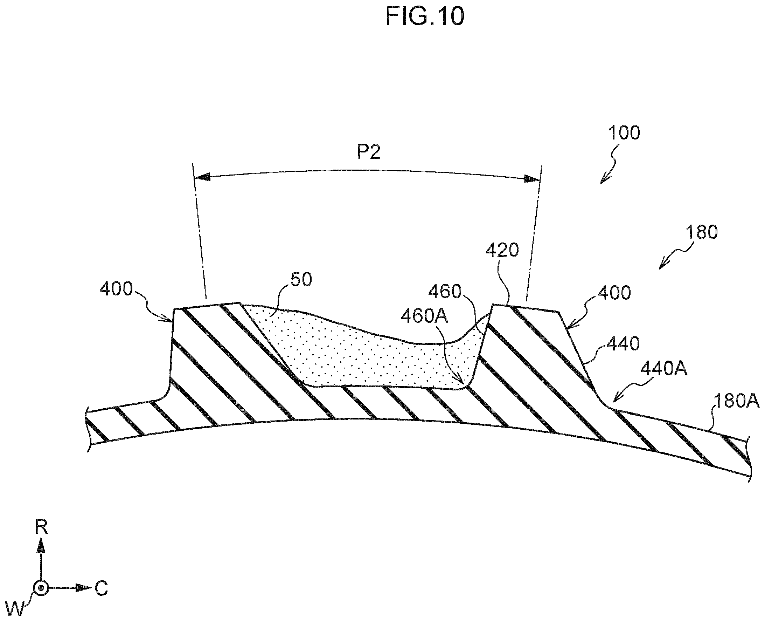

In other words, in the present exemplary embodiment, a pitch P1 (see FIG. 6) at which lugs 40 that are mutually adjacent in the tire circumferential direction C are disposed in the tire ground-contact area S is set larger than a pitch P2 of lugs 400 in a tire that is formed solely by the lugs 400 shown in FIG. 10 (described below).

The number of lugs 40 disposed in the tire ground-contact area S of the tire 10 is set to three.

Note that, on the opposite side from the tire rotation direction C of the tire ground-contact area S shown in FIG. 2, because the lugs 40 only have the portion thereof that is adjacent to the inner end portion 40A in contact with the ground, so that the majority thereof is not positioned within the tire ground-contact area S, these lugs 40 are not included in this number.

Here, the front surface 44 is an example of a first surface, while the rear surface 46 is an example of a second surface.

Within a range where the lugs 40 are disposed at not less than 25% of the tread width TW from the equator CL, the lugs 40 are formed at an angle of not less than 20° and not more than 50° relative to a tire rotation axis direction (not shown in the drawings) on an opposite side from the tire rotation direction C approaching the outer side in the tire width direction W.

In the present exemplary embodiment, an angle α1 of the front surface 44 of the lugs 40 relative to the tire rotation axis direction is set to an angle of 45° on the opposite side from the tire rotation direction C, and an angle α2 of the rear surface 46 of the lugs 40 relative to the tire rotation axis direction is set to an angle of 30° on the opposite side from the tire rotation direction C.

In addition, the angles of the front surface 44 and the rear surface 46 on the side thereof that is closest to the outer end portion 40B are each bent 5° from the aforementioned respective angles towards the tire rotation direction C.

In a case in which the above-described angles of the lugs 40 are less than 20° on the opposite side from the tire rotation direction C, then compared with a case in which these angles are not less than 20° and not more than 50° on the opposite side from the tire rotation direction C, it is more difficult for mud 50 to be released from the tread portion in conjunction with the rotation of the tire 10, so that an angle of less than 20° on the opposite side from the tire rotation direction C is not preferable.

Moreover, in a case in which the above-described angles are more than 50° on the opposite side from the tire rotation direction C, then compared with a case in which these angles are not less than 20° and not more than 50° on the opposite side from the tire rotation direction C, there is a reduction in the tractive force of the tire 10 and a reduction in the ability of the tire 10 to withstand side force (i.e., cornering force) applied to the tire 10, so that an angle of more than 50° on the opposite side from the tire rotation direction C is not preferable.

The angles α1 and α2 of the lugs 40 may be altered as is appropriate in consideration of the tire size and usage condition characteristics and the like of the tire 10.

Note that, of the lugs 40 that are mutually adjacent in the tire circumferential direction C, the number of lugs 40 within the tire ground-contact area S in the tread portion 18 that are in contact with the ground is set to three when the tire 10 is fitted onto a standard rim as stipulated in the JATMA YEAR BOOK, 2018 edition, and is filled to an internal pressure of 100% of the air pressure that corresponds to the maximum load capability at the applicable size/ply rating as per the JATMA YEAR BOOK, and when a load that corresponds to this maximum load capability is applied thereto.

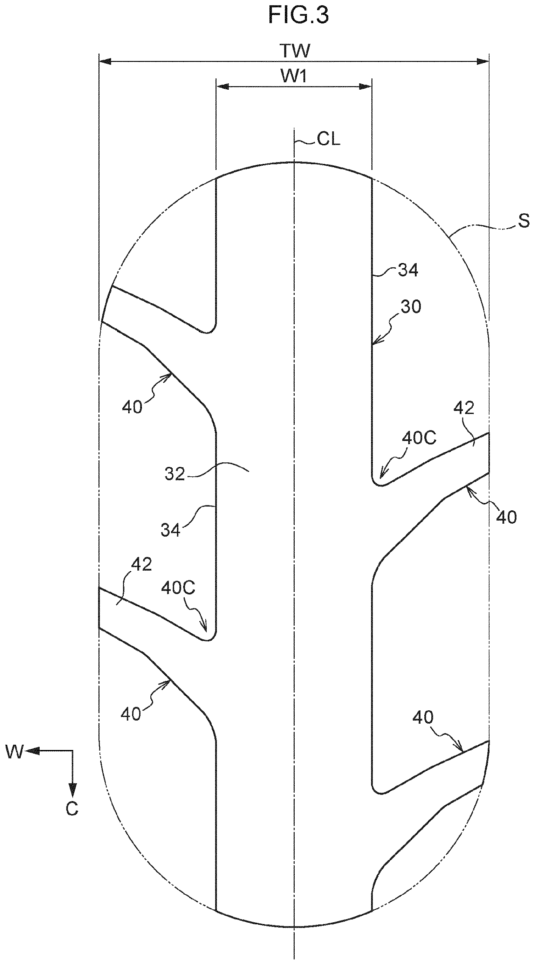

Moreover, as is shown in FIG. 3, the number of lugs 40 that are in contact with the ground within the tire ground-contact area S of the lugs 40 may also be set to four.

In a case in which the number of lugs 40 that are in contact with the ground in the tire ground-contact area S of the lugs 40 is set to two or fewer, then although the amount of mud 50 adhering to the tread portion is less than when the number of such lugs is set to three or more, there is a decrease in the tractive force so that two or fewer ground-contacting lugs 40 is not preferable.

On the other hand, in a case in which the number of such lugs 40 is set to five or more, then although there is an increase in the tractive force compared with a case in which the number of such lugs is four or less, the amount of mud 50 adhering to the tread portion increases, so that five or more of such lugs 40 is not preferable.

Because these comparisons have a relationship to the size of the width W1 relative to the tread width TW of the center rib 30, detailed comparison results will be described more fully below in conjunction with the width W1 relative to the tread width TW of the center rib 30.

Next, actions and effects of the tire according to the present exemplary embodiment will be described.

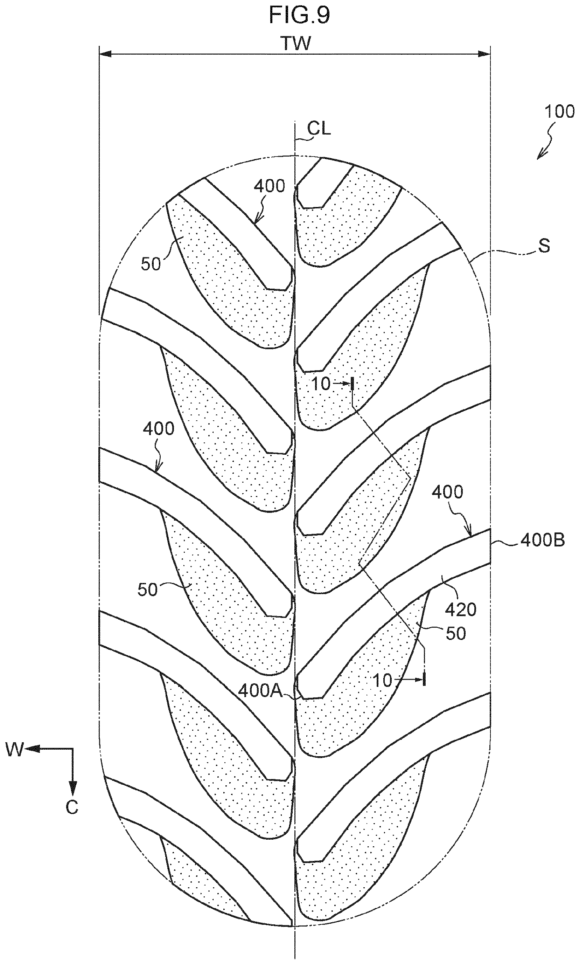

Firstly, a tire 100 of a comparative example is shown in FIG. 9 and FIG. 10.

As is shown in FIG. 9, a tread portion 180 of the tire 100 is not provided with the center rib 30, and is formed instead solely by a plurality of lugs 400.

The lugs 400 protrude from an outer circumferential surface 180A of the tread portion 180 towards the outer side in the tire radial direction R, and are each disposed on both sides in the tread width TW direction of the equator CL, and at intervals from each other in the tire circumferential direction.

The lugs 400 are each formed so as to include a ground-contacting surface 420, a front surface 440, and a rear surface 460.

The ground-contacting surface 420 has a predetermined height from the outer circumferential surface 180A of the tread portion 180.

The front surface 440 is an inclined surface that slopes on the tire rotation direction C side from an end portion in the tire rotation direction C side of the ground-contacting surface 420 towards the outer circumferential surface 180A. The front surface 440 is connected to the outer circumferential surface 180A via a front-surface continuous portion 440A.

The rear surface 460 is an inclined surface that slopes on the opposite side from the tire rotation direction C from an end portion on the opposite side from the tire rotation direction C of the ground-contacting surface 420 towards the outer circumferential surface 180A. The rear surface 460 is connected to the outer circumferential surface 18A via a rear-surface continuous portion 46A.

The number of lugs 400 that are disposed in the tire ground-contacting area S of the tire 100 is nine. Note that, in FIG. 9, on the opposite side from the tire rotation direction C, because the lugs 400 only have the portion thereof that is adjacent to the inner end portion 400A in contact with the ground, so that the majority thereof is not positioned within the tire ground-contact area, these lugs 400 are not included in this number.

In this case, the locations depicted as mud 50 in FIG. 9 show locations where it is particularly easy for compressed mud 50 to be adhered due to the axle weight applied to the tire 100 and to the tractive force.

When a half-tractor or the like onto which the tire 100 is fitted runs through a deep wet field such as a paddy field, mud 50 becomes adhered to the entire tread portion 180 of the tire 100.

As is shown in FIG. 10, in the tread portion 180 at this time, mud 50 becomes adhered between the lugs 400 that are mutually adjacent to each other in the tire rotation direction C almost as far as the height of the lugs 400 from the outer circumferential surface 180A of the tread portion 180.

In other words, the mud 50 becomes adhered between the rear surface 460 of the lug 400 positioned on the tire rotation direction C side, and the front surface 440 of the lug 400 that is mutually adjacent thereto on the opposite side in the tire rotation direction C so as to bury the outer circumferential surface 180A of the tread portion 180.

A large amount of this mud 50 adhering to the tire outer circumferential surface 180A also remains adhered due to the rotation of the tire 100 in the tire rotation direction C.

This is also affected by the fact that, as is described above, the pitch P2 of the lugs 400 in the tire rotation direction C is smaller than the pitch P1 of the lugs 40 in the tire circumferential direction C of the lugs 40 of the present exemplary embodiment shown in FIG. 6.

There are cases in which a half-tractor or the like onto which the tires 100 which are maintaining this state have been fitted enters a public road or the like that is connected to the paddy field or the like and travels along this public road, and there are cases in which the half-tractor travels along a public road or the like while traveling at a faster travel speed than when traveling in a paddy field.

As a consequence of this, because of centrifugal force generated by the rise in the rotation speed of the tire 10, in some cases the mud 50 adhering to the tread portion 180 of the tire 100 may peel off from the tread portion 180 and remain on the road surface of the public road or the like.

In contrast to this, in the tire 10 of the present exemplary embodiment, the center rib 30 that has a width W1 on both sides sandwiching the equator CL of the tire 10, and that extends in the tire circumferential direction C is provided on the outer circumferential surface 18A of the tread portion 18.

Moreover, the plurality of ribs 40 that are joined integrally with both end surfaces 34 of the center rib 30, and are disposed on both sides of the center rib 30 at intervals from each other in the tire circumferential direction C are provided on both sides in the width direction of the center rib 30 on the outer circumferential surface 18A of the tread portion 18.

Additionally, the sum total of the surface area of the ground-contacting surfaces 42 of all of the lugs 40 is not less than 4.5% and not more than 15% of the surface area of the tread portion 18 when the tread portion 18 is unrolled as a flat surface and looked at in plan view.

In the present exemplary embodiment, as is described above, the pitch P1 at which mutually adj acent lugs 40 are disposed in the tire circumferential direction C of the lugs 40 is set larger than the pitch P2 of the lugs 400 of the tire 100 of the comparative example.

This pitch P1 varies depending on the tire size, however, the number of lugs 40 in the tire ground-contact area S is set to either three or four.

### [Test Examples]

Here, tests were performed using the tire 10 of the present exemplary embodiment taking the width W1 of the center rib 30 and the number of lugs 40 in the tire ground-contact area S as variables. A comparative examination was made of the amount of mud 50 adhering to the tread portion 18 and the tractive force.

### [Test Content]

The tests of the tire 10 were performed based on the following conditions.
1. Tires used in the test
   (a) Tire Size: 9.5 ~ 24
   (b) Rim Width = W7, Tire Internal Pressure = 220 kPa, Tire Load = 32852.28N (3350 kg) (in accordance with JATMA Standards)
2. Compared Test Tires
   (1) The tire 100 of the comparative example in which the number of lugs was set at 18.
   (2) Test Tire 2: The width W1 of the center rib 30 was 10% of the tread width TW, and 5 lugs were present within the ground-contact area S.
   (3) Test Tire 3: The width W1 of the center rib 30 was 30% of the tread width TW, and 5 lugs were present within the ground-contact area S.
   (4) Test Tire 4: The width W1 of the center rib 30 was 30% of the tread width TW, and 4 lugs were present within the ground-contact area S.
   (5) Test Tire 5: The width W1 of the center rib 30 was 40% of the tread width TW, and 3 lugs were present within the ground-contact area S.
   (6) Test Tire 6: The width W1 of the center rib 30 was 30% of the tread width TW, and 2 lugs were present within the ground-contact area S.
   (7) Test Tire 7: The width W1 of the center rib 30 was 50% of the tread width TW, and 3 lugs were present within the ground-contact area S.
   (8) Test Tire 8: The width W1 of the center rib 30 was 60% of the tread width TW, and 3 lugs were present within the ground-contact area S.
3. Evaluation Method
   The tires were evaluated by being tested on an actual vehicle. For this vehicle a KUBOTA (Registered Trademark) Power Crawler (Registered Trademark) SMZ85 (i.e., 85 horsepower) was used.
   (A) Mud Adhesion Test
      The agricultural field used for the test was a wet field and the tilling depth was set to 30 cm. The vehicle speed was set to 5 km/h. The vehicle was made to travel in a straight line within the wet field for a distance of 200 meters and was then stopped. The amount of mud 50 adhering to the tread portion 18 was then measured using a weight scale.
   (B) Traction Test
      Under the conditions imposed by the above-described JATMA Standards, the tractive force was measured a plurality of times when the slip ratio of the tire 10 was within a range of 5% to 15%, and the average value thereof was calculated.
4. Test Results

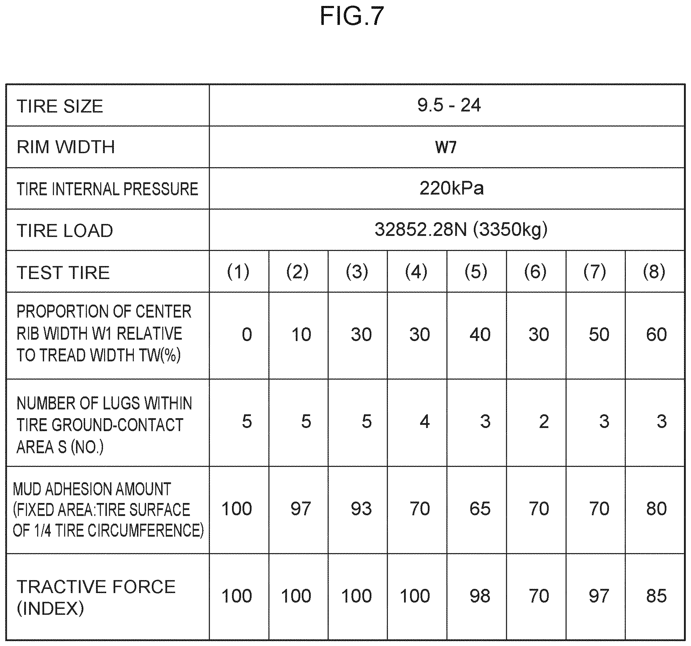

The results obtained when testing was performed using an actual vehicle in the above-described conditions are shown in FIG. 7.

The values shown in FIG. 7 respectively indicate the following results. Namely, regarding the mud adhesion amount, the smaller the numerical value, the lesser the amount of mud adhering to the tread portion 18. Regarding the tractive force, the larger the numerical value, the greater the tractive force.

As is shown in FIG. 7, regarding the mud adhesion amount, the obtained results were excellent and showed that the mud adhesion amount on test tires (4) through (7) was 70% or less of the mud adhesion amount on test tire (1) of the comparative example.

Note that, regarding the mud adhesion amount on test tires (2), (3), and (8), no significant reduction in the amount of mud adhesion could be seen compared to the mud adhesion amount on test tire (1) of the comparative example.

Regarding the tractive force, the obtained results were excellent and showed that the tractive force of test tires (3) through (5), and (7) was either the same or only slightly less compared to test tire (1) of the comparative example.

Note that, regarding the tractive force of test tires (6) and (8), there was a significant reduction in the tractive force compared to the tractive force of test tire (1) of the comparative example.

### [Conclusions]

Based on these test results, comprehensive judgements were made about the amount of mud adhesion and the tractive force.

As is shown in FIG. 7, from these results it was confirmed that, in the cases of test tires (4), (5), and (7), the amount of mud adhesion was reduced compared to test tire (1) of the comparative example, and that any reduction of the tractive force of these tires was also inhibited.

More specifically, in the case of test tire (5) in which the width W1 of the center rib 30 was 40% of the tread width TW, and the number of lugs within the tire ground-contact area S was three, the test results gave this test tire (5) the highest overall evaluation regarding the amount of mud adhesion and the tractive force.

Moreover, in the case of test tire (4) in which the width W1 of the center rib 30 was 30% of the tread width TW, and the number of lugs within the tire ground-contact area S was four, it was confirmed that there was no reduction in the tractive force, and that the amount of mud adhesion was suppressed.

Furthermore, in the case of test tire (7) in which the width W1 of the center rib 30 was 50% of the tread width TW, and the number of lugs within the tire ground-contact area S was three, it was confirmed that the tractive force was substantially similar to that obtained from test tire (5), and that the amount of mud adhesion was suppressed to an equivalent amount as in the case of test tire (4).

From these results, it was confirmed that a tire 10 in which the width W1 of the center rib 30 of the tire 10 is not less than 30% and not more than 50% of the tread width TW, and the number of lugs 40 within the tire ground-contact area S was three or four was ideal.

As has been described above, the present exemplary embodiment is provided with the following structure and effects.

The tire 10 according to the first exemplary embodiment is provided with the center rib 30 that is provided on the outer circumferential surface 18A of the tread portion 18, and protrudes towards the outer side in the tire radial direction R, and has width on both sides sandwiching the equator CL of the tire 10, and extends in the tire circumferential direction C.

In addition, the tire 10 is provided with the lugs 40 that are provided on the outer circumferential surface 18A of the tread portion 18, and protrude towards the outer side in the tire radial direction on both sides of the center rib 30 in the width direction thereof, and are joined integrally to the two end surfaces 34 of the center rib 30, and on the one side and the other side in the width direction of the center rib 30, are disposed respectively on this one side and other side at intervals from each other in the tire circumferential direction.

Moreover, the center rib 30 has a width of not less than 30% and not more than 50% of the tread width TW of the tread portion 18.

In addition, within a range where the lugs 40 are disposed at not less than 25% of the tread width TW from the equator CL, the lugs 40 are formed at an angle of not less than 20° and not more than 50° relative to a tire rotation axis direction on an opposite side from the tire rotation direction C.

Furthermore, a sum total of a surface area of ground-contacting surfaces 42 of all of the lugs 40 is not less than 4.5% and not more than 15% of a surface area of the tread portion 18 when the tread portion 18 is unrolled as a flat surface and looked at in plan view.

As a result, compared with a structure in which the lugs 40 are formed as far as the vicinity of the equator CL of the tread portion 18, it is possible to more effectively inhibit mud 50 from adhering to the tread portion 18.

Moreover, of the lugs 40 that are mutually adjacent in the tire circumferential direction C, the number of lugs 40 within the tire ground-contact area S in the tread portion 18 that are in contact with the ground is set to three or to four when the tire 10 is fitted onto a standard rim as stipulated in the JATMA YEAR BOOK, 2018 edition, and is filled to an internal pressure of 100% of the air pressure that corresponds to the maximum load capability at the applicable size/ply rating as per the JATMA YEAR BOOK, and when a load that corresponds to this maximum load capability is applied thereto.

As a result, compared with a structure in which the lugs 40 are formed as far as the vicinity of the equator CL of the tread portion 18, it is possible to more effectively inhibit mud 50 from adhering to the tread portion 18.

Moreover, the two end surfaces 34 are formed so as to be parallel with the equator CL.

As a consequence of this, compared with a structure in which the two end surfaces 34 of the center rib 30 meander back and forth relative to the equator CL, it is possible to more effectively inhibit mud 50 from adhering to the tread portion 18.

In addition, the two end surfaces 34 are inclined so as to slope respectively in a direction towards the equator CL as they approach the outer side in the tire radial direction R.

As a result, compared with a case in which the two end surfaces 34 of the center rib 30 are inclined so as to slope respectively in a direction away from the equator CL as they approach the outer side in the tire radial direction R, it is possible to more effectively inhibit mud 50 from adhering to the tread portion 18.

Furthermore, each lug 40 has the inner end portion 40A which is joined to the center rib, and the outer end portion 40B which forms the outer end in the width direction of the tread portion 18, and the dimension of the inner end portion 40A is set to not less than 20 mm and not more than 50 mm, while the dimension of the outer end portion 40B is set to not less than 15 mm and not more than 30 mm.

As a consequence of this, the width of the lugs 40 in the tire circumferential direction makes it possible to more effectively inhibit mud 50 from adhering to the tread portion 18 compared to a case in which the inner end portion 40A and the outer end portion 40B have the same dimension.

Moreover, each lug 40 has the inner end portion 40A which is joined to the center rib 30, and the outer end portion 40B which forms the outer end in the width direction of the tread portion 18, and the width of the lugs 40 in the tire circumferential direction C is smaller at the outer end portion 40B than at the inner end portion 40A.

As a consequence of this, compared with a structure in which the width of the lugs 40 in the tire circumferential direction C is larger at the outer end portion 40B, which forms the outer end in the width direction of the tread portion 18, than at the inner end portion 40A, which is joined to the center rib 30, it is possible to more effectively inhibit mud 50 from adhering to the tread portion 18.

In addition, each lug 40 has the ground-contacting surface 42, and the front surface 44 that is inclined on the tire rotation direction C side so as to slope from the end portion in the tire rotation direction C of the ground-contacting surface 42 towards the outer circumferential surface 18A.

Furthermore, each lug 40 also has the rear surface 46 that is inclined on the opposite side from the tire rotation direction C so as to slope from the end portion on the opposite side from the tire rotation direction C of the ground-contacting surface 42 towards the outer circumferential surface 18A.

In addition, the front surfaces 44 are formed at an angle of not less than 21° and not more than 31° on the tire rotation direction C side relative to a perpendicular line extending from the end portion on the tire rotation direction C side of the ground-contacting surface 42 towards the outer circumferential surface 18A.

Moreover, the rear surfaces 46 are formed at an angle of not less than 18° and not more than 27° on the opposite side from the tire rotation direction C relative to a perpendicular line extending from the end portion on the opposite side from the tire rotation direction C of the ground-contacting surface 42 towards the outer circumferential surface 18A.

As a consequence, compared with a structure in which the front surface 44 and the rear surface 46 of each lug 40 are formed perpendicularly to the tire rotation direction C from the ground-contacting surface 42 towards the outer circumferential surface 18A of the tread portion 18, it is possible to more effectively inhibit mud 50 from adhering to the tread portion 18.

### [Second Exemplary Embodiment]

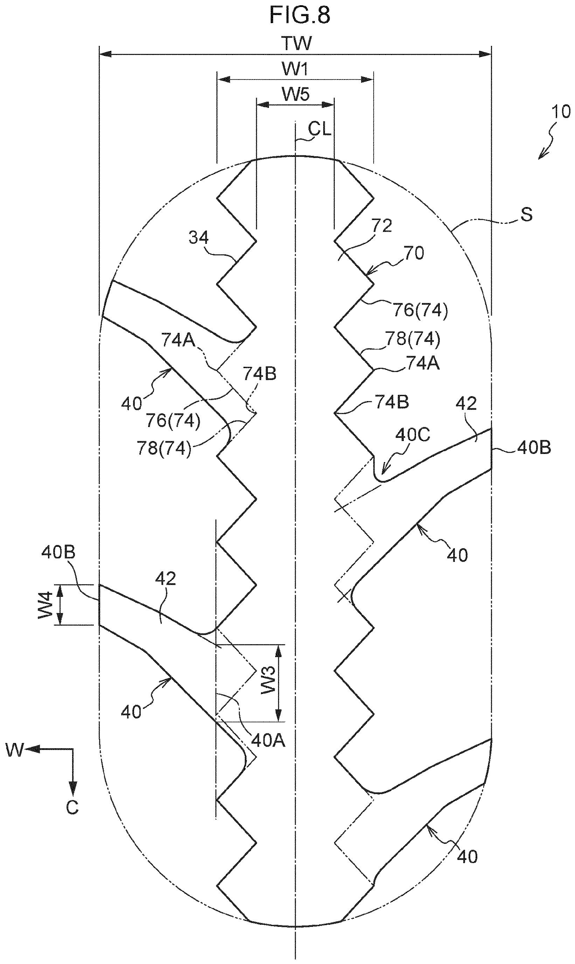

Next, an example of a tire according to a second exemplary embodiment of the present invention will be described using FIG. 8.

Note that portions of the second exemplary embodiment that are shared with the first exemplary embodiment are given the same descriptive symbols, and the following description concentrates principally on portions thereof that differ from the first exemplary embodiment.

The tire 10 of the second exemplary embodiment is provided with a center rib 70 whose two end surfaces 74 are formed in a concave-convex configuration.

More specifically, the two end surfaces 74 of the center rib 70 have protruding portions 74Ahaving a width W1, recessed portions 74B having a width W5, front inclined surfaces 76, and rear inclined surfaces 78.

Each front inclined surface 76 is formed on a line connecting a protruding portion 74A to the adjacent recessed portion 74B on the tire rotation direction C side. Each rear inclined surface 78 is formed on a line connecting a protruding portion 74A to the adjacent recessed portion 74B on the opposite side from the tire rotation direction C side.

These front inclined surfaces 76 and rear inclined surfaces 78 are formed so as to be continuous with each other in the tire rotation direction C.

In other words, the concave-convex shaped two end surfaces 74 are formed by the protruding portions 74A, which are each sandwiched by a front inclined surface 76 and a rear inclined surface 78, and the recessed portions 74B, which are each sandwiched by a rear inclined surface 78 and a front inclined surface 76.

The lugs 40 that are provided on both sides in the tire width direction of the two end surfaces 74 which are formed in this concave-convex configuration are disposed relative to the center rib 70 in such a way as to be continuous with either the front inclined surface 76 or the rear inclined surface 78 of the two end surfaces 74, or with both of these surfaces.

In other words, the inner end portion 40A of each lug 40 is integrally continuous with either a protruding portion 74A or a recessed portion 74B, or with both of these.

A continuous portion 40C that is shaped as a curved surface is formed in these continuous portions.

The position of each inner surface 40A on the two end surfaces 74 which are formed in a concave-convex configuration is on a virtual line connecting apexes of protruding portions 74 that are mutually adjacent to each other in the tire circumferential direction, and the dimension of each inner surface 40A at these positions is W3.

Note that, in the same way as in the first exemplary embodiment, each outer end portion 40B is located on the tread end T (see FIG. 1) of the lugs 40 in a direction away from the equator CL, and extends from the ground-contacting surface 42 towards the sidewall portion 16, and is connected to the sidewall portion 16. Each outer end portion 40B has a dimension W4 in a direction extending in the tire rotation direction C.

Moreover, the width W5 of the portion of the center rib 70 between mutually opposing recessed portions 74B is set to a dimension that is approximately half or more of the width W1 of the portion of the center rib 70 between mutually opposing protruding portions 74A.

As a consequence of this, it is possible to achieve an improvement in tractive force while still inhibiting any increase in the amount of mud adhesion.

In the present exemplary embodiment as well, in the same way as in the first exemplary embodiment, the sum total of the surface area of the ground-contacting surfaces 42 of all of the lugs 40 is not less than 4.5% and not more than 15% of the surface area of the tread portion 18 when the tread portion 18 is unrolled as a flat surface and looked at in plan view.

Moreover, as is described above, the fact that the pitch P1 at which mutually adjacent lugs 40 are disposed in the tire circumferential direction C of the lugs 40 is set larger than the pitch P2 of the lugs 400 of the tire 100 of the comparative example is also the same as in the first exemplary embodiment.

This pitch P1 varies depending on the tire size, however, the fact that the number of lugs 40 in the tire ground-contact area S is set to either three or four is also the same as in the first exemplary embodiment.

Note that in FIG. 8, the protruding portions 74A and the recessed portions 74B are shown as sharply bending portions, however, it is preferable that these portions are formed as smoothly curving portions. By forming the recessed portions 74B, in particular, as curved surfaces, it is possible to more effectively inhibit the amount of mud adhesion compared with when the recessed portions 74B are formed as sharp bend portions.

In this way, in the tire 10 of the present exemplary embodiment, the two end surfaces 74 of the center rib 70 are formed having a concave-convex configuration relative to the equator CL.

As a consequence of this, compared with the above-described structure in which the two end surfaces 34 of the center rib 30 are formed so as to be parallel with the equator CL, it is possible to inhibit mud from adhering to the tread portion 18 while still achieving an improvement in traction performance of the tread portion 18.

Priority is claimed on Japanese Patent Application No. 2018-120303, filed June 25, 2018.

## Claims

1. A pneumatic tire (10) for an agricultural vehicle, the pneumatic tire (10) comprising:
a center rib (30) that is provided on an outer circumference of a tread portion (18), that protrudes towards an outer side in a tire radial direction (R), that has width (W1) on both sides sandwiching a tire equator (CL), and that extends in a tire circumferential direction (C); and
lugs (40) that are provided on the outer circumference of the tread portion (18), that protrude towards the outer side in the tire radial direction (R) on both sides in a width direction of the center rib (30), that are joined integrally with two end surfaces (34) of the center rib (30), and that are disposed respectively on one side and on another side of the center rib (30) in the width direction (W) thereof so as to be at intervals from each other in the tire circumferential direction (C) on both the one side and the other side, wherein:
the center rib (30) has a width of from 30% to 50% of a tread width (TW) of the tread portion (18), and
within a range where the lugs (40) are disposed at 25% or greater of the tread width (TW) from the equator (CL), the lugs (40) are formed at an angle of from 20° to 50°, relative to a tire rotation axis direction, on an opposite side from a tire rotation direction (C), and
a sum total of a surface area of ground-contacting surfaces (42) of all of the lugs (40) is from 4.5% to 15% of a surface area of the tread portion (18) in a case in which the tread portion (18) is unrolled as a flat surface and seen in plan view, **characterized in that**,
the two end surfaces (34) are inclined so as to slope respectively in a direction towards the tire equator (CL) as the two end surfaces (34) approach the outer side in the tire radial direction (R).

2. The pneumatic tire (10) for an agricultural vehicle according to Claim 1, wherein, of lugs (40) that are mutually adjacent in the tire circumferential direction (C), a number of lugs (40) within a tire ground-contact area (S) in the tread portion (18) that are in contact with the ground is three or four in a case in which the tire (10) is fitted onto a standard rim as stipulated in the JATMA YEAR BOOK, 2018 edition, and is filled to an internal pressure of 100% of an air pressure that corresponds to a maximum load capability at an applicable size/ply rating as per the JATMA YEAR BOOK, and in a case in which a load that corresponds to this maximum load capability is applied thereto.

3. The pneumatic tire (10) for an agricultural vehicle according to Claim 1 or Claim 2, wherein the two end surfaces (34) are formed so as to be parallel with the tire equator (CL).

4. A pneumatic tire (10) for an agricultural vehicle, the pneumatic tire (10) comprising:
a center rib (30, 70) that is provided on an outer circumference of a tread portion (18), that protrudes towards an outer side in a tire radial direction (R), that has width (W1) on both sides sandwiching a tire equator CL), and that extends in a tire circumferential direction (C); and
lugs (40) that are provided on the outer circumference of the tread portion (18), that protrude towards the outer side in the tire radial direction (R) on both sides in a width direction 'W) of the center rib (30, 70), that are joined integrally with two end surfaces (34, 74) of the center rib (30, 70), and that are disposed respectively on one side and on another side of the center rib (30, 70) in the width direction (W) thereof so as to be at intervals from each other in the tire circumferential direction (C) on both the one side and the other side, wherein:
the center rib (30, 70) has a width of from 30% to 50% of a tread width (TW) of the tread portion (18), and
within a range where the lugs (40) are disposed at 25% or greater of the tread width (TW) from the equator (CL), the lugs (40) are formed at an angle of from 20° to 50°, relative to a tire rotation axis direction, on an opposite side from a tire rotation direction (C), and
a sum total of a surface area of ground-contacting surfaces (42) of all of the lugs (40) is from 4.5% to 15% of a surface area of the tread portion (18) in a case in which the tread portion (18) is unrolled as a flat surface and seen in plan view, **characterized in that**,
the two end surfaces (74) are formed in a concave-convex configuration relative to the tire equator (CL).

5. The pneumatic tire (10) for an agricultural vehicle according to Claim 4, wherein the two end surfaces (74) are inclined so as to slope respectively in a direction towards the tire equator (CL) as the two end surfaces (74) approach the outer side in the tire radial direction (R).

6. The pneumatic tire (10) for an agricultural vehicle according to any one of Claim 1 through Claim 5, wherein the lugs (40) each have an inner end portion (40A) that is joined to the center rib (30, 70), and an outer end portion (40B) that forms an outer end in a width direction (W) of the tread portion (18), and a width of the lugs (40) in the tire circumferential direction (C) is from 20 mm to 50 mm at the inner end portion (40A), and from 15 mm to 30 mm at the outer end portion (40B).

7. The pneumatic tire (10) for an agricultural vehicle according to Claim 6, wherein the width of the lugs (40) in the tire circumferential direction (C) is smaller at the outer end portion (40B) than at the inner end portion (40A).

8. The pneumatic tire (10) for an agricultural vehicle according to any one of Claim 1 through Claim 7, wherein the lugs (40) each have a ground-contacting surface (42), a first surface (44) that is inclined on a tire rotation direction side so as to slope from an end portion on a tire rotation direction side of the ground-contacting surface (42) towards the outer circumference, and a second surface (46) that is inclined on the opposite side from the tire rotation direction (C) so as to slope from an end portion on the opposite side from the tire rotation direction side of the ground-contacting surface (42) towards the outer circumference, and the first surfaces (44) are formed at an angle of from 21° to 31° on the tire rotation direction side, relative to a perpendicular line extending from the end portion on the tire rotation direction side of the ground-contacting surface (42) towards the outer circumference, and the second surfaces (46) are formed at an angle of from 18° to 27° on the opposite side from the tire rotation direction (C), relative to a perpendicular line extending from the end portion on the opposite side from the tire rotation direction (C) of the ground-contacting surface (42) towards the outer circumference.

9. The pneumatic tire (10) for an agricultural vehicle according to Claim 4, wherein, of lugs (40) that are mutually adjacent in the tire circumferential direction (C), a number of lugs (40) within a tire ground-contact area (S) in the tread portion (18) that are in contact with the ground is three or to four in a case in which the tire (10) is fitted onto a standard rim as stipulated in the JATMA YEAR BOOK, 2018 edition, and is filled to an internal pressure of 100% of an air pressure that corresponds to a maximum load capability at an applicable size/ply rating as per the JATMA YEAR BOOK, and in a case in which a load that corresponds to this maximum load capability is applied thereto.

## Patentansprüche

1. Luftreifen (10) für ein landwirtschaftliches Fahrzeug, wobei der Luftreifen (10) Folgendes umfasst:
eine Mittelrippe (30), die an einem Außenumfang eines Laufflächenabschnitts (18) bereitgestellt ist, die zu einer in einer Reifenradialrichtung (R) äußeren Seite hin vorspringt, die eine Breite (W1) aufweist, die auf beiden Seiten einen Reifenäquator (CL) umschließt, und die sich in einer Reifenumfangsrichtung (C) erstreckt; und
Stollen (40), die an dem Außenumfang des Laufflächenabschnitts (18) bereitgestellt sind, die auf beiden Seiten in einer Breitenrichtung der Mittelrippe (30) zu der in der Reifenradialrichtung (R) äußeren Seite hin vorspringen, die einstückig mit zwei Endflächen (34) der Mittelrippe (30) verbunden sind, und die jeweils auf einer Seite und auf einer anderen Seite der Mittelrippe (30) in der Breitenrichtung (W) davon so angeordnet sind, dass sie sich in Abständen voneinander in der Reifenumfangsrichtung (C) auf sowohl der einen Seite als auch der anderen Seite befinden, wobei:
die Mittelrippe (30) eine Breite von 30 % bis 50 % einer Laufflächenbreite (TW) des Laufflächenabschnitts (18) aufweist, und
innerhalb eines Bereichs, wo die Stollen (40) bei 25 % oder mehr der Laufflächenbreite (TW) von dem Äquator (CL) angeordnet sind, die Stollen (40) in einem Winkel von 20° bis 50°, im Verhältnis zu einer Reifenrotationsachsenrichtung, auf einer von einer Reifenrotationsrichtung (C) entgegengesetzten Seite, geformt sind, und
eine Gesamtsumme einer Oberfläche von Bodenberührungsflächen (42) aller Stollen (40) von 4,5 % bis 15 % einer Oberfläche des Laufflächenabschnitts (18) beträgt, in einem Fall, in dem der Laufflächenabschnitt (18) als eine ebene Fläche abgerollt und in Draufsicht betrachtet wird, **dadurch gekennzeichnet, dass**
die zwei Endflächen (34) so geneigt sind, dass sie jeweils in einer Richtung, zu dem Reifenäquator (CL) hin, abfallen, wenn sich die zwei Endflächen (34) der in der Reifenradialrichtung (R) äußeren Seite annähern.

2. Luftreifen (10) für ein landwirtschaftliches Fahrzeug nach Anspruch 1, wobei, von Stollen (40), die in der Reifenumfangsrichtung (C) zueinander benachbart sind, eine Anzahl von Stollen (40) innerhalb eines Reifenbodenberührungsbereichs (S) in dem Laufflächenabschnitt (18), die sich in Berührung mit dem Boden befinden, drei oder vier beträgt, in einem Fall, in dem der Reifen (10) auf einer Standardfelge eingepasst ist, wie in dem JATMA YEAR BOOK, Ausgabe 2018, vorgeschrieben, und bis zu einem Innendruck von 100 % eines Luftdrucks gefüllt ist, der einer maximalen Tragfähigkeit bei einer anwendbaren Größe/einem anwendbaren Ply Rating gemäß dem JATMA YEAR BOOK entspricht, und in einem Fall, in dem eine Last, die dieser maximalen Tragfähigkeit entspricht, auf denselben ausgeübt wird.

3. Luftreifen (10) für ein landwirtschaftliches Fahrzeug nach Anspruch 1 oder Anspruch 2, wobei die zwei Endflächen (34) so geformt sind, dass sie parallel zu dem Reifenäquator (CL) sind.

4. Luftreifen (10) für ein landwirtschaftliches Fahrzeug, wobei der Luftreifen (10) Folgendes umfasst:
eine Mittelrippe (30, 70), die an einem Außenumfang eines Laufflächenabschnitts (18) bereitgestellt ist, die zu einer in einer Reifenradialrichtung (R) äußeren Seite hin vorspringt, die eine Breite (W1) aufweist, die auf beiden Seiten einen Reifenäquator (CL) umschließt, und die sich in einer Reifenumfangsrichtung (C) erstreckt; und
Stollen (40), die an dem Außenumfang des Laufflächenabschnitts (18) bereitgestellt sind, die auf beiden Seiten in einer Breitenrichtung 'W) der Mittelrippe (30, 70) zu der in der Reifenradialrichtung (R) äußeren Seite hin vorspringen, die einstückig mit zwei Endflächen (34, 74) der Mittelrippe (30, 70) verbunden sind, und die jeweils auf einer Seite und auf einer anderen Seite der Mittelrippe (30, 70) in der Breitenrichtung (W) davon so angeordnet sind, dass sie sich in Abständen voneinander in der Reifenumfangsrichtung (C) auf sowohl der einen Seite als auch der anderen Seite befinden, wobei:
die Mittelrippe (30, 70) eine Breite von 30 % bis 50 % einer Laufflächenbreite (TW) des Laufflächenabschnitts (18) aufweist, und
innerhalb eines Bereichs, wo die Stollen (40) bei 25 % oder mehr der Laufflächenbreite (TW) von dem Äquator (CL) angeordnet sind, die Stollen (40) in einem Winkel von 20° bis 50°, im Verhältnis zu einer Reifenrotationsachsenrichtung, auf einer von einer Reifenrotationsrichtung (C) entgegengesetzten Seite, geformt sind, und
eine Gesamtsumme einer Oberfläche von Bodenberührungsflächen (42) aller Stollen (40) von 4,5 % bis 15 % einer Oberfläche des Laufflächenabschnitts (18) beträgt, in einem Fall, in dem der Laufflächenabschnitt (18) als eine ebene Fläche abgerollt und in Draufsicht betrachtet wird, **dadurch gekennzeichnet, dass**
die zwei Endflächen (74) in einer konkav-konvexen Konfiguration im Verhältnis zu dem Reifenäquator (CL) geformt sind.

5. Luftreifen (10) für ein landwirtschaftliches Fahrzeug nach Anspruch 4, wobei die zwei Endflächen (74) so geneigt sind, dass sie jeweils in einer Richtung, zu dem Reifenäquator (CL) hin, abfallen, wenn sich die zwei Endflächen (74) der in der Reifenradialrichtung (R) äußeren Seite annähern.

6. Luftreifen (10) für ein landwirtschaftliches Fahrzeug nach einem der Ansprüche 1 bis 5, wobei die Stollen (40) jeweils einen inneren Endabschnitt (40A), der mit der Mittelrippe (30, 70) verbunden ist, und einen äußeren Endabschnitt (40B), der ein in einer Breitenrichtung (W) des Laufflächenabschnitts (18) äußeres Ende bildet, aufweisen, und eine Breite der Stollen (40) in der Reifenumfangsrichtung (C) von 20 mm bis 50 mm an dem inneren Endabschnitt (40A) und von 15 mm bis 30 mm an dem äußeren Endabschnitt (40B) beträgt.

7. Luftreifen (10) für ein landwirtschaftliches Fahrzeug nach Anspruch 6, wobei die Breite der Stollen (40) in der Reifenumfangsrichtung (C) an dem äußeren Endabschnitt (40B) kleiner ist als an dem inneren Endabschnitt (40A).

8. Luftreifen (10) für ein landwirtschaftliches Fahrzeug nach einem der Ansprüche 1 bis 7, wobei die Stollen (40) jeweils eine Bodenberührungsfläche (42), eine erste Fläche (44), die auf einer Reifenrotationsrichtungsseite so geneigt ist, dass sie von einem Endabschnitt auf einer Reifenrotationsrichtungsseite der Bodenberührungsfläche (42) zu dem Außenumfang hin abfällt, und eine zweite Fläche (46), die auf der von der Reifenrotationsrichtung (C) entgegengesetzten Seite so geneigt ist, dass sie von einem Endabschnitt auf der von der Reifenrotationsrichtungsseite entgegengesetzten Seite der Bodenberührungsfläche (42) zu dem Außenumfang hin abfällt, aufweisen, und die ersten Flächen (44) in einem Winkel von 21° bis 31° auf der Reifenrotationsrichtungsseite, im Verhältnis zu einer senkrechten Linie, die sich von dem Endabschnitt auf der Reifenrotationsrichtungsseite der Bodenberührungsfläche (42) zu dem Außenumfang hin erstreckt, geformt sind, und die zweiten Flächen (46) in einem Winkel von 18° bis 27° auf der von der Reifenrotationsrichtung (C) entgegengesetzten Seite, im Verhältnis zu einer senkrechten Linie, die sich von dem Endabschnitt auf der von der Reifenrotationsrichtung (C) entgegengesetzten Seite der Bodenberührungsfläche (42) zu dem Außenumfang hin erstreckt, geformt sind.

9. Luftreifen (10) für ein landwirtschaftliches Fahrzeug nach Anspruch 4, wobei, von Stollen (40), die in der Reifenumfangsrichtung (C) zueinander benachbart sind, eine Anzahl von Stollen (40) innerhalb eines Reifenbodenberührungsbereichs (S) in dem Laufflächenabschnitt (18), die sich in Berührung mit dem Boden befinden, drei oder zu vier beträgt, in einem Fall, in dem der Reifen (10) auf einer Standardfelge eingepasst ist, wie in dem JATMA YEAR BOOK, Ausgabe 2018, vorgeschrieben, und bis zu einem Innendruck von 100 % eines Luftdrucks gefüllt ist, der einer maximalen Tragfähigkeit bei einer anwendbaren Größe/einem anwendbaren Ply Rating gemäß dem JATMA YEAR BOOK entspricht, und in einem Fall, in dem eine Last, die dieser maximalen Tragfähigkeit entspricht, auf denselben ausgeübt wird.

## Revendications

1. Pneumatique (10) pour un véhicule agricole, le pneumatique (10) comprenant :
une nervure centrale (30) qui est fournie sur une circonférence externe d'une partie de bande de roulement (18), qui fait saillie vers un côté externe, dans une direction radiale du pneumatique (R), qui a une largeur (W1) sur les deux côtés prenant en sandwich un équateur du pneumatique (CL), et qui s'étend dans une direction circonférentielle du pneumatique (C) ; et
des barrettes (40) qui sont fournies sur la circonférence externe de la partie de bande de roulement (18), qui font saillie vers le côté externe, dans la direction radiale du pneumatique (R) sur des deux côtés dans une direction de la largeur de la nervure centrale (30), qui sont reliées d'un seul tenant avec deux surfaces d'extrémité (34) de la nervure centrale (30), et qui sont disposées respectivement sur un côté et sur un autre côté de la nervure centrale (30), dans la direction de la largeur (W) de celle-ci, de sorte à se situer à des intervalles les unes des autres, dans la direction circonférentielle du pneumatique (C), sur les deux de l'un côté comme de l'autre côté, dans lequel :
la nervure centrale (30) a une largeur représentant 30 % à 50 % d'une largeur de bande de roulement (TW) de la partie de bande de roulement (18), et
dans le cadre d'une plage où les barrettes (40) sont disposées à 25 % ou plus de la largeur de bande de roulement (TW) par rapport à l'équateur (CL), les barrettes (40) sont formées à un angle compris entre 20° et 50° par rapport à une direction de l'axe de rotation du pneumatique, sur un côté opposé à la direction de rotation du pneumatique (C), et
une somme totale d'une aire de surface de surfaces de contact au sol (42) de toutes les barrettes (40) représente 4,5 % à 15 % d'une aire de surface de la partie de bande de roulement (18), dans un cas dans lequel la partie de bande de roulement (18) est déroulée comme une surface plate et vue dans une vue en plan, **caractérisé en ce que**
les deux surfaces d'extrémité (34) sont inclinées de sorte à être en pente respectivement dans une direction allant vers l'équateur du pneumatique (CL) lorsque les deux surfaces d'extrémité (34) se rapprochent du côté externe, dans la direction radiale du pneumatique (R).

2. Pneumatique (10) pour un véhicule agricole selon la revendication 1, dans lequel, parmi des barrettes (40) qui sont mutuellement adjacentes dans la direction circonférentielle du pneumatique (C), un nombre de barrettes (40) à l'intérieur d'une surface de contact au sol du pneumatique (S) dans la partie de bande de roulement (18), qui sont en contact avec le sol, correspond à trois ou quatre dans un cas dans lequel le pneumatique (10) est ajusté sur une jante standard, comme stipulé dans le JATMA YEAR BOOK, édition 2018, et est rempli à une pression interne de 100 % d'une pression d'air qui correspond à une capacité de charge maximale, à une taille/un indice de robustesse applicable selon le JATMA YEAR BOOK, et dans un cas dans lequel une charge correspondant à cette capacité de charge maximale y est appliquée.

3. Pneumatique (10) pour un véhicule agricole selon la revendications 1 ou la revendication 2, dans lequel les deux surfaces d'extrémité (34) sont formées de sorte à être parallèles à l'équateur du pneumatique (CL).

4. Pneumatique (10) pour un véhicule agricole, le pneumatique (10) comprenant :
une nervure centrale (30, 70) qui est fournie sur une circonférence externe d'une partie de bande de roulement (18), qui fait saillie vers un côté externe, dans une direction radiale du pneumatique (R), qui a une largeur (W1) sur les deux côtés prenant en sandwich un équateur du pneumatique (CL), et qui s'étend dans une direction circonférentielle du pneumatique (C) ; et
des barrettes (40) qui sont fournies sur la circonférence externe de la partie de bande de roulement (18), qui font saillie vers le côté externe, dans la direction radiale du pneumatique (R) sur des deux côtés dans une direction de la largeur 'W) de la nervure centrale (30, 70), qui sont reliées d'un seul tenant avec deux surfaces d'extrémité (34, 74) de la nervure centrale (30, 70), et qui sont disposées respectivement sur un côté et sur un autre côté de la nervure centrale (30, 70), dans la direction de la largeur (W) de celle-ci, de sorte à se situer à des intervalles les unes des autres, dans la direction circonférentielle du pneumatique (C), sur les deux de l'un côté comme de l'autre côté, dans lequel :
la nervure centrale (30, 70) a une largeur représentant 30 % à 50 % d'une largeur de bande de roulement (TW) de la partie de bande de roulement (18), et
dans le cadre d'une plage où les barrettes (40) sont disposées à 25 % ou plus de la largeur de bande de roulement (TW) par rapport à l'équateur (CL), les barrettes (40) sont formées à un angle compris entre 20° et 50° par rapport à une direction de l'axe de rotation du pneumatique, sur un côté opposé à une direction de rotation du pneumatique (C), et
une somme totale d'une aire de surface de surfaces de contact au sol (42) de toutes les barrettes (40) représente 4,5 % à 15 % d'une aire de surface de la partie de bande de roulement (18), dans un cas dans lequel la partie de bande de roulement (18) est déroulée comme une surface plate et vue dans une vue en plan, **caractérisé en ce que**
les deux surfaces d'extrémité (74) sont formées dans une configuration concave-convexe par rapport à l'équateur du pneumatique (CL).

5. Pneumatique (10) pour un véhicule agricole selon la revendication 4, dans lequel les deux surfaces d'extrémité (74) sont inclinées de sorte à être en pente respectivement dans une direction allant vers l'équateur du pneumatique (CL) lorsque les deux surfaces d'extrémité (74) se rapprochent du côté externe, dans la direction radiale du pneumatique (R).

6. Pneumatique (10) pour un véhicule agricole selon l'une quelconque des revendications 1 à 5, dans lequel les barrettes (40) comportent chacune une partie d'extrémité interne (40A) qui est reliée à la nervure centrale (30, 70), et une partie d'extrémité externe (40B) qui forme une extrémité externe dans une direction de la largeur (W) de la partie de bande de roulement (18), et une largeur des barrettes (40) dans la direction circonférentielle du pneumatique (C) est comprise entre 20 mm et 50 mm au niveau de la partie d'extrémité interne (40A), et entre 15 mm et 30 mm au niveau de la partie d'extrémité externe (40B).

7. Pneumatique (10) pour un véhicule agricole selon la revendication 6, dans lequel la largeur des barrettes (40) dans la direction circonférentielle du pneumatique (C) est plus petite au niveau de la partie d'extrémité externe (40B) qu'au niveau de la partie d'extrémité interne (40A).

8. Pneumatique (10) pour un véhicule agricole selon l'une quelconque des revendications 1 à 7, dans lequel les barrettes (40) comportent chacune une surface de contact au sol (42), une première surface (44) qui est inclinée sur un côté de la direction de rotation du pneumatique, de sorte être en pente d'une partie d'extrémité sur un côté de la direction de rotation du pneumatique de la surface de contact au sol (42) vers la circonférence externe, et une deuxième surface (46) qui est inclinée sur le côté opposé au côté de la direction de rotation du pneumatique (C), de sorte être en pente d'une partie d'extrémité sur le côté opposé au côté de la direction de rotation du pneumatique de la surface de contact au sol (42) vers la circonférence externe, et les premières surfaces (44) sont formées à un angle compris entre 21° et 31° sur le côté de la direction de rotation du pneumatique, par rapport à une ligne perpendiculaires s'étendant de la partie d'extrémité sur le côté de la direction de rotation du pneumatique de la surface de contact au sol (42) vers la circonférence externe, et les deuxièmes surfaces (46) sont formées à un angle compris entre 18° et 27° sur le côté opposé à la direction de rotation du pneumatique (C), par rapport à une ligne perpendiculaire s'étendant de la partie d'extrémité sur le côté opposé à la direction de rotation du pneumatique (C) de la surface de contact au sol (42) vers la circonférence externe.

9. Pneumatique (10) pour un véhicule agricole selon la revendication 4, dans lequel, parmi des barrettes (40) qui sont mutuellement adjacentes dans la direction circonférentielle du pneumatique (C), un nombre de barrettes (40) à l'intérieur d'une surface de contact au sol du pneumatique (S) dans la partie de bande de roulement, (18), qui sont en contact avec le sol, correspond à trois ou à quatre dans un cas dans lequel le pneumatique (10) est ajusté sur une jante standard comme stipulé dans le JATMA YEAR BOOK, édition 2018, et est rempli à une pression interne de 100 % d'une pression d'air correspondant à une capacité de charge maximale, à une taille/un indice de robustesse applicable selon le JATMA YEAR BOOK, et dans un cas dans lequel une charge qui correspond à cette capacité de charge maximale y est appliquée.
